# EUROPEAN PATENT APPLICATION

(11) **EP 4 611 388 A1**
(43) Date of publication of application: **03.09.2025**
(21) Application number: 23890190.4
(22) Date of filing: 28.06.2023
(51) Int. Cl.: H04Q 11/00

(54) **ONU DATA COLLECTION METHOD AND COMMUNICATION APPARATUS**

(30) Priority: 15.11.2022 CN 202211430947
(71) Applicant: Huawei Technologies Co., Ltd., Shenzhen, Guangdong 518129 (CN)
(72) Inventor: YU, Naishen, Shenzhen, Guangdong 518129 (CN); CHEN, Zhandong, Shenzhen, Guangdong 518129 (CN)
(74) Representative: Thun, Clemens
(86) International application number: PCT/CN2023/103512
(87) International publication number: WO 2024/103748

(57) **Abstract**

This application provides an ONU data collection method and a communication apparatus, and is applied to the field of optical communication technologies. The method may include: An optical line terminal OLT receives capability information from an ONU, where the capability information indicates that the ONU supports data subscription. The OLT sends a first message to the ONU, where the first message includes information about a subscription instance and a collection period. The first message indicates the ONU to periodically report data of the subscription instance based on the collection period. Based on this solution, the OLT only needs to configure information about the data subscription for the ONU once, so that the ONU can periodically report, based on the collection period, the data that the OLT subscribes to, and the OLT does not need to send a message each time to collect data. This can greatly save OLT resources and improve system efficiency.

## Description

This application claims priority to Chinese Patent Application No. 202211430947.7, filed with the China National Intellectual Property Administration on November 15, 2022 and entitled "ONU DATA COLLECTION METHOD AND COMMUNICATION APPARATUS" which is incorporated herein by reference in its entirety.

### TECHNICAL FIELD

This application relates to the field of optical communication technologies, and in particular, to an optical network unit (optical network unit, ONU) data collection method and a communication apparatus.

### BACKGROUND

A passive optical network (passive optical network, PON) technology is widely applied to the fiber to the X (fiber to the X, FTTX for short) field. Three main parts in a PON include an optical line terminal (optical line terminal, OLT) located at a central office end, an ONU located at a user end, and an optical distribution network (optical distribution network, ODN) connecting the OLT and the ONU. The ONU functions as a remote end of the OLT. A network management server in the entire PON network configures the ONU or obtains information (including, for example, port traffic, bandwidth utilization, and a packet loss rate) through remote management by using the OLT.

Currently, for collection of data of the ONU, the OLT actively sends a request message to the ONU to obtain the data of the ONU. In a scenario in which an OLT is connected to a large quantity of ONUs, if data collection needs to be performed on all the ONUs once, the OLT needs to send a request message to each ONU. However, a large quantity of request messages occupy a large quantity of OLT resources. Further, limited by resources and capabilities of the OLT, the OLT does not support data collection with a short period.

### SUMMARY

This application provides an ONU data collection method and a communication apparatus, to resolve a problem of a large quantity of consumed resources and a limitation by a capability of an OLT in an existing ONU data collection method.

To achieve the foregoing objective, the following technical solutions are used in this application.

According to a first aspect, an ONU data collection method is provided. The method may be performed by an OLT, may be performed by a component of the OLT, for example, a processor, a chip, or a chip system of the OLT, or may be implemented by a logical module or software that can implement all or some of functions of the OLT. The method may include: The OLT receives capability information from an ONU, where the capability information indicates that the ONU supports data subscription. The OLT sends a first message to the ONU, where the first message includes information about a subscription instance and a collection period. The first message indicates the ONU to periodically report data of the subscription instance based on the collection period.

Based on this solution, when the ONU supports the data subscription, the OLT may configure information about the data subscription to the ONU, so that the ONU can periodically report, based on the collection period, the data that the OLT subscribes to. In the method, the OLT needs to perform configuration only once, so that the ONU can periodically report the data, and the OLT does not need to send a message each time to collect the data, thereby greatly saving OLT resources and improving system efficiency. Further, in the method, the ONU actively reports the data, and this is not limited by a processing capability of the OLT. Therefore, the method can support short-period data collection.

With reference to the first aspect, in a possible implementation, the first message is an OMCI message of a subscription type; and the first message includes a first field and a second field, where the first field includes the information about the subscription instance, and the second field includes the collection period.

With reference to the first aspect, in a possible implementation, the second field further includes an attribute mask and an attribute subscription behavior, where the attribute mask indicates an attribute of the subscription instance, and the attribute subscription behavior indicates that the data of the subscription instance that is reported by the ONU is an attribute value obtained by collecting the attribute of the subscription instance.

With reference to the first aspect, in a possible implementation, the second field further includes test code and a test subscription behavior, where the test code is used to test the subscription instance, and the test subscription behavior indicates that the data of the subscription instance that is reported by the ONU is a test result obtained by testing the subscription instance.

With reference to the first aspect, in a possible implementation, the subscription instance is an instance of an OMCI managed entity in the ONU, and the information about the subscription instance includes an identifier of the OMCI managed entity to which the subscription instance belongs and an identifier of the subscription instance.

With reference to the first aspect, in a possible implementation, the first message is an OAMPDU. The first message includes a third field and a fourth field, the third field includes the information about the subscription instance, and the fourth field includes the collection period.

With reference to the first aspect, in a possible implementation, the subscription instance is an instance of a first OAM managed object, and the information about the subscription instance includes a branch and a leaf of the first OAM managed object.

With reference to the first aspect, in a possible implementation, the first message further includes first extended operation code, and the first extended operation code indicates a data subscription operation.

With reference to the first aspect, in a possible implementation, the method further includes: The OLT receives a second message from the ONU, where the second message includes first data, and the first data is the data collected by the ONU based on the information about the subscription instance and the collection period.

With reference to the first aspect, in a possible implementation, when the first message is the OMCI message, the second message is also an OMCI message; and the first data is the attribute value of the subscription instance, or the first data is the test result obtained by testing the subscription instance.

With reference to the first aspect, in a possible implementation, the second message is an OMCI message of a reporting type.

With reference to the first aspect, in a possible implementation, when the first message is the OAMPDU, the second message is also an OAMPDU; and the first data is basic information of the subscription instance.

With reference to the first aspect, in a possible implementation, the second message further includes second extended operation code, and the second extended operation code indicates a data reporting operation.

According to a second aspect, an ONU data collection method is provided. The method may be performed by an ONU, may be performed by a component of the ONU, for example, a processor, a chip, or a chip system of the ONU, or may be implemented by a logical module or software that can implement all or some of functions of the ONU. The method may include: The ONU sends capability information to an optical line terminal OLT, where the capability information indicates that the ONU supports data subscription. The ONU receives a first message from the OLT, where the first message includes information about a subscription instance and a collection period; and the first message indicates the ONU to periodically report data of the subscription instance based on the collection period.

With reference to the second aspect, in a possible implementation, the first message is an ONU management and control interface OMCI message of a subscription type; and the first message includes a first field and a second field, where the first field includes the information about the subscription instance, and the second field includes the collection period.

With reference to the second aspect, in a possible implementation, the second field further includes an attribute mask and an attribute subscription behavior, where the attribute mask indicates an attribute of the subscription instance, and the attribute subscription behavior indicates that the data of the subscription instance that is reported by the ONU is an attribute value obtained by collecting the attribute of the subscription instance.

With reference to the second aspect, in a possible implementation, the second field further includes test code and a test subscription behavior, where the test code is used to test the subscription instance, and the test subscription behavior indicates that the data of the subscription instance that is reported by the ONU is a test result obtained by testing the subscription instance.

With reference to the second aspect, in a possible implementation, the subscription instance is an instance of an OMCI managed entity in the ONU, and the information about the subscription instance includes an identifier of the OMCI managed entity to which the subscription instance belongs and an identifier of the subscription instance.

With reference to the second aspect, in a possible implementation, the first message is an OAMPDU. The first message includes a third field and a fourth field, the third field includes the information about the subscription instance, and the fourth field includes the collection period.

With reference to the second aspect, in a possible implementation, the subscription instance is an instance of a first OAM managed object, and the information about the subscription instance includes a branch and a leaf of the first OAM managed object.

With reference to the second aspect, in a possible implementation, the first message further includes first extended operation code, and the first extended operation code indicates a data subscription operation.

With reference to the second aspect, in a possible implementation, the method may further include: The ONU sends a second message to the OLT, where the second message includes first data, and the first data is the data collected by the ONU based on the information about the subscription instance and the collection period.

With reference to the second aspect, in a possible implementation, when the first message is the OMCI message, the second message is also an OMCI message; and the first data is the attribute value of the subscription instance, or the first data is the test result obtained by testing the subscription instance.

With reference to the second aspect, in a possible implementation, the second message is an OMCI message of a reporting type.

With reference to the second aspect, in a possible implementation, when the first message is the OAMPDU, the second message is also an OAMPDU; and the first data is basic information of the subscription instance.

With reference to the second aspect, in a possible implementation, the second message further includes second extended operation code, and the second extended operation code indicates a data reporting operation.

For technical effects of any implementation method of the second aspect, refer to corresponding technical effects in the first aspect.

According to a third aspect, an ONU data collection method is provided. The method may be performed by an OLT, may be performed by a component of the OLT, for example, a processor, a chip, or a chip system of the OLT, or may be implemented by a logical module or software that can implement all or some of functions of the OLT. The method may include: The OLT receives capability information from an ONU, where the capability information indicates that the ONU supports data subscription. The OLT sends a third message to the ONU, where the third message is used to establish a data subscription managed entity, the data subscription managed entity is configured to manage information about a subscription instance and a collection period, and the information about the subscription instance and the collection period are used by the ONU to periodically report data of the subscription instance.

Based on this solution, a data subscription function may be implemented in a manner of defining a data subscription managed entity for the ONU. The technical effect achieved in the first aspect can also be achieved.

With reference to the third aspect, in a possible implementation, the third message is an ONU management and control interface OMCI message of a create type, and the data subscription managed entity belongs to an OMCI managed entity.

With reference to the third aspect, in a possible implementation, the data subscription managed entity is a managed entity of an attribute subscription type or a managed entity of a test subscription type.

With reference to the third aspect, in a possible implementation, when the data subscription managed entity is the managed entity of the attribute subscription type, the data of the subscription instance that is reported by the ONU is an attribute value of the subscription instance.

With reference to the third aspect, in a possible implementation, when the data subscription managed entity is the managed entity of the test subscription type, the data of the subscription instance that is reported by the ONU is a test result of the subscription instance.

With reference to the third aspect, in a possible implementation, the method further includes: The OLT sends a fourth message to the ONU, where the fourth message indicates a configuration of the subscription instance to the data subscription managed entity, and the configuration of the subscription instance includes the information about the subscription instance and the collection period.

With reference to the third aspect, in a possible implementation, the fourth message is an OMCI message of a set type.

With reference to the third aspect, in a possible implementation, the information about the subscription instance includes an entity identifier of an entity to which the subscription instance belongs and an instance identifier of the subscription instance.

With reference to the third aspect, in a possible implementation, when the data subscription managed entity is the managed entity of the attribute subscription type, the configuration of the subscription instance further includes an attribute mask corresponding to the subscription instance, and the attribute mask indicates an attribute of the subscription instance.

With reference to the third aspect, in a possible implementation, when the data subscription managed entity is the managed entity of the test subscription type, the configuration of the subscription instance further includes test code corresponding to the subscription instance, and the test code is used to test the subscription instance.

With reference to the third aspect, in a possible implementation, the method further includes: The OLT receives a second message from the ONU, where the second message includes first data, and the first data is the data collected by the ONU based on the information about the subscription instance and the collection period.

With reference to the third aspect, in a possible implementation, the second message is an OMCI message of a reporting type.

With reference to the third aspect, in a possible implementation, the first data is the attribute value of the subscription instance, or the first data is the test result obtained by testing the subscription instance.

According to a fourth aspect, an ONU data collection method is provided. The method may be performed by an ONU, may be performed by a component of the ONU, for example, a processor, a chip, or a chip system of the ONU, or may be implemented by a logical module or software that can implement all or some of functions of the ONU. The method may include: The ONU sends capability information to an OLT, where the capability information indicates that the ONU supports data subscription. The ONU receives a third message from the OLT, where the third message is used to establish a data subscription managed entity, the data subscription managed entity is configured to manage information about a subscription instance and a collection period, and the information about the subscription instance and the collection period are used by the ONU to periodically report data of the subscription instance.

With reference to the fourth aspect, in a possible implementation, the third message is an ONU management and control interface OMCI message of a create type, and the data subscription managed entity belongs to an OMCI managed entity.

With reference to the fourth aspect, in a possible implementation, the data subscription managed entity is a managed entity of an attribute subscription type or a managed entity of a test subscription type.

With reference to the fourth aspect, in a possible implementation, when the data subscription managed entity is the managed entity of the attribute subscription type, the data of the subscription instance that is reported by the ONU is an attribute value of the subscription instance.

With reference to the fourth aspect, in a possible implementation, when the data subscription managed entity is the managed entity of the test subscription type, the data of the subscription instance that is reported by the ONU is a test result of the subscription instance.

With reference to the fourth aspect, in a possible implementation, the method further includes: The ONU receives a fourth message sent by the OLT, where the fourth message indicates a configuration of the subscription instance to the data subscription managed entity, and the configuration of the subscription instance includes the information about the subscription instance and the collection period.

With reference to the fourth aspect, in a possible implementation, the fourth message is an OMCI message of a set type.

With reference to the fourth aspect, in a possible implementation, the information about the subscription instance includes an entity identifier of an entity to which the subscription instance belongs and an instance identifier of the subscription instance.

With reference to the fourth aspect, in a possible implementation, when the data subscription managed entity is the managed entity of the attribute subscription type, the configuration of the subscription instance further includes an attribute mask corresponding to the subscription instance, and the attribute mask indicates an attribute of the subscription instance.

With reference to the fourth aspect, in a possible implementation, when the data subscription managed entity is the managed entity of the test subscription type, the configuration of the subscription instance further includes test code corresponding to the subscription instance, and the test code is used to test the subscription instance.

With reference to the fourth aspect, in a possible implementation, the method further includes: The ONU sends a second message to the OLT, where the second message includes first data, and the first data is the data collected by the ONU based on the information about the subscription instance and the collection period.

With reference to the fourth aspect, in a possible implementation, the second message is an OMCI message of a reporting type.

With reference to the fourth aspect, in a possible implementation, the first data is the attribute value of the subscription instance, or the first data is the test result obtained by testing the subscription instance.

According to a fifth aspect, a communication apparatus is provided, including a processor. The processor is configured to: after being coupled to a memory and reading instructions in the memory, perform, according to the instructions, the ONU data collection method according to any one of the first aspect, the second aspect, the third aspect, or the fourth aspect.

According to a sixth aspect, a computer-readable storage medium is provided. The computer-readable storage medium stores instructions. When the instructions are run on a computer, the computer is enabled to perform the ONU data collection method according to any one of the first aspect, the second aspect, the third aspect, or the fourth aspect.

According to a seventh aspect, a computer program product including instructions is provided. When the computer program product runs on a computer, the computer is enabled to perform the ONU data collection method according to any one of the first aspect, the second aspect, the third aspect, or the fourth aspect.

For technical effects achieved by any design manner of the third aspect to the seventh aspect, refer to technical effects achieved by different design manners of the first aspect, the second aspect, the third aspect, or the fourth aspect. Details are not described herein again.

### BRIEF DESCRIPTION OF DRAWINGS

FIG. 1 is a diagram of a structure of a PON according to an embodiment of this application;
FIG. 2 is a schematic flowchart of collecting data from an ONU by an OLT according to an embodiment of this application;
FIG. 3 is a schematic flowchart of collecting data from an ONU by an OLT according to an embodiment of this application;
FIG. 4 is a schematic flowchart of collecting data from an ONU by an OLT according to an embodiment of this application;
FIG. 5 is a schematic flowchart of collecting data from an ONU by an OLT according to an embodiment of this application;
FIG. 6 is a schematic flowchart of collecting data from an ONU by an OLT according to an embodiment of this application;
FIG. 7 is a schematic flowchart of an ONU data collection method according to an embodiment of this application;
FIG. 8 is a schematic flowchart of an ONU data collection method according to an embodiment of this application;
FIG. 9 is a schematic flowchart of an ONU data collection method according to an embodiment of this application;
FIG. 10 is a diagram of a format of a standard OAMPDU according to an embodiment of this application;
FIG. 11 is a diagram of a format of an extended OAMPDU according to an embodiment of this application;
FIG. 12 is a diagram of a format of a first OAM message according to an embodiment of this application;
FIG. 13 is a schematic flowchart of an ONU data collection method according to an embodiment of this application;
FIG. 14 is a schematic flowchart of an ONU data collection method according to an embodiment of this application;
FIG. 15 is a diagram of a structure of a communication apparatus according to an embodiment of this application; and
FIG. 16 is a diagram of a structure of a communication apparatus according to an embodiment of this application.

### DESCRIPTION OF EMBODIMENTS

First, terms and related technologies in this application are briefly described. The following interpretations and descriptions are intended to facilitate understanding of embodiments of this application, and should not be construed as any limitation on the scope of protection claimed in embodiments of this application.

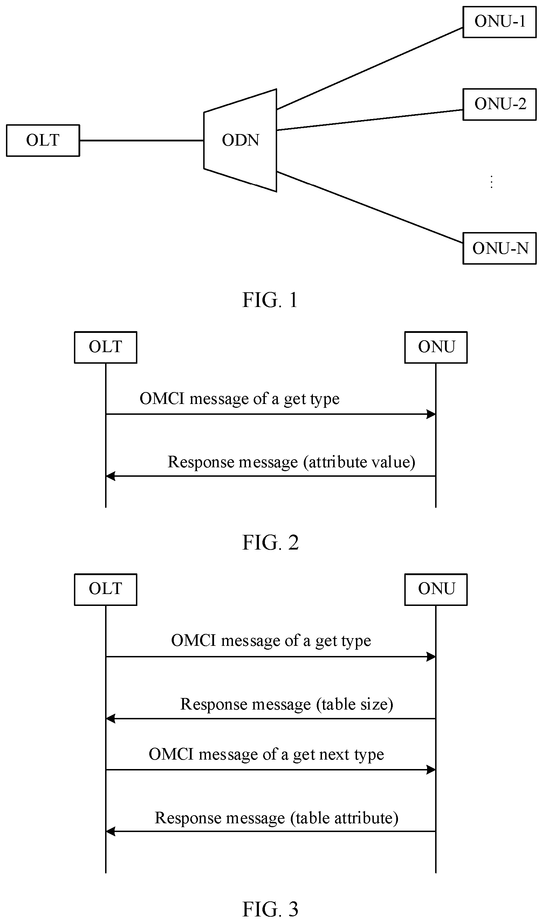

PON: is a fiber access network in which all transmission devices are passive devices. Due to a simple structure and low costs of the PON, the PON has been widely applied to the field of optical fiber access. The PON mainly includes an OLT, an ONU, and an ODN. For example, FIG. 1 is a diagram of a structure of a PON. As shown in FIG. 1, an OLT may be connected to N ONUs (an ONU-1 to an ONU-N in FIG. 1) via an ODN.

With development of technologies, new PON technologies, such as an Ethernet passive optical network (Ethernet passive optical network, EPON) and a gigabit-passive optical network (gigabit-capable passive optical network, GPON), are gradually derived from the PON.

GPON: is a new generation broadband passive optical access standard, has advantages such as a high bandwidth, high efficiency, wide coverage, and rich user interfaces, and is considered as an ideal technology for most carriers to implement access network service broadbandization and comprehensive reconstruction.

EPON: is a passive optical network based on Ethernet technologies. The EPON uses the PON technologies at a physical layer and an Ethernet protocol at a data link layer, to implement Ethernet access based on a PON topology structure. The EPON integrates advantages of the PON technologies and the Ethernet technologies, such as low costs, high bandwidth, high scalability, compatibility with an existing Ethernet, and easy management.

An optical network unit management and control interface (ONU management and control interface, OMCI) protocol is a protocol for information exchange between an OLT and an ONT defined in the GPON standard, and is used by the OLT to manage the ONT in the GPON network. The management includes configuration management, fault management, performance management, security management, and the like.

In operations, administration and maintenance (operation administration and maintenance, OAM), based on an actual requirement of network operation of a carrier, network management work is usually classified into three types: operations (operations), administration (administration), and maintenance (maintenance), OAM for short. The OAM may be applied to the Ethernet as a network fault detection tool. The OAM can effectively improve Ethernet management and maintenance capabilities and ensure stable network operation. The EPON uses the Ethernet protocol at the data link layer. Therefore, in the EPON network, the OLT can use an OAM protocol to operate, manage, and maintain the ONT.

In the GPON, the OLT may manage the ONU according to the OMCI protocol, and complete mutual communication. A managed entity (managed entity, ME) is defined in ITU-T G.988. The managed entity includes an entity attribute, an entity action, a notification, and a relationship between entities, and is an abstraction of an ONU service and resource. The managed entity may also be referred to as an OMCI entity. In the ONU, a management information base (management information base, MIB) includes an instance of a managed entity, and the OLT may manage the ONU by accessing the instance of the managed entity. The instance is obtained by performing instantiation by the managed entity, and a plurality of instances may be obtained by performing instantiation by a same managed entity.

When the OLT manages the ONU according to the OMCI protocol, if the OLT needs to collect data of the ONU, the OLT may actively send an OMCI message to the ONU to request to obtain the data of the ONU.

The data collected by the OLT from the ONU may include a plurality of different types of data. For example, the data collected by the OLT from the ONU may include common static attribute information (for example, a port number), a table attribute (for example, text information stored in a form of some tables), performance monitoring (performance monitoring, PM) information (for example, traffic and a data transmission rate), and a test result obtained by testing the ONU.

The OMCI protocol defines a plurality of types of OMCI messages. The plurality of types of OMCI messages include the OMCI message that may be used to collect the data of the ONU, and different types of data may be obtained by using different types of OMCI messages.

In a possible implementation, the common static attribute information may be obtained by using a get (get) message (namely, an OMCI message of a get type). As shown in FIG. 2, an OLT may send a get message to an ONU, where the get message is for requesting to obtain one or more attributes of a managed entity. The ONU may return a response (response) message of the get message to the OLT based on the get message, where the response message may be used to report attribute information of the managed entity.

In a possible implementation, a table attribute may be obtained by using a get message and a get next (get next) message (namely, an OMCI message of a get next type). As shown in FIG. 3, first, an OLT may send a get message to an ONU, where the get message may point to a table attribute. The ONU may lock a to-be-queried table based on the get message that points to the table attribute, to wait for a next get (get next) message (namely, an OMCI message of a get next type) to perform retrieval in the table. The ONU may return a response (response) message of the get message to the OLT, where the response message may be used to report a size of the table. After receiving the response message indicating the size of the table, the OLT may send at least one get next message to the ONU. The ONU may query the table based on the get next message, and may then return the response message of the get next message to the OLT to report information about the table attribute.

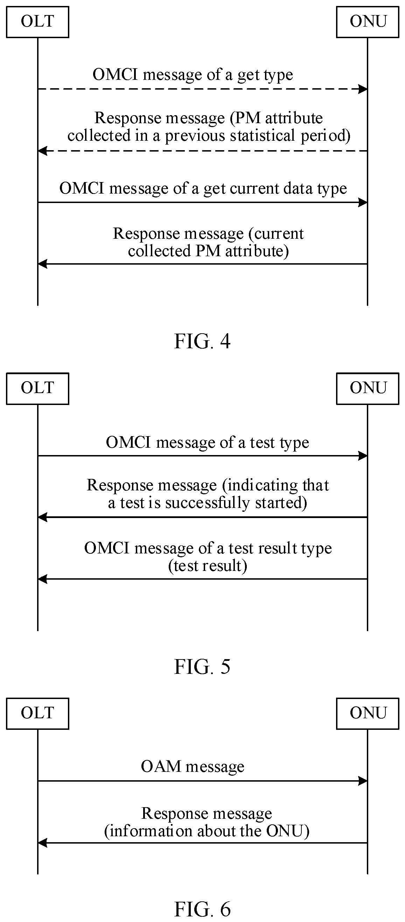

In a possible implementation, performance monitoring information may be obtained by using a get current data (get current data) message (an OMCI message of a get current data type). As shown in FIG. 4, an OLT may send a get current data message to an ONU, where the get current data message may be used to obtain a current accumulated value of an attribute of a PM managed entity in the ONU. The current accumulated value of the attribute of the PM managed entity is performance monitoring information currently collected by the PM managed entity. Therefore, the ONU may return a response message of the get current data message to the OLT to report the performance monitoring information accumulated by the PM managed entity. However, because a counter corresponding to the attribute of the PM managed entity counts periodically, the current accumulated value of the counter is only a value accumulated by the PM managed entity within a current statistical period. Optionally, the OLT may further send a get message to the ONU before sending the get current data message to the ONU, where the get message may be used to obtain a value accumulated by a timer corresponding to the attribute of the PM managed entity in a previous statistical period. Correspondingly, the ONU may return a response message of the get message to the OLT to report the value accumulated by the timer corresponding to the attribute of the PM managed entity within the previous statistical period.

In a possible implementation, the OLT may indicate the ONU to perform a test, and the ONU then reports a test result to the OLT, to collect the test result of the ONU. As shown in FIG. 5, an OLT may send a test (test) message (namely, an OMCI message of a test type) to an ONU, where the test message may request to test a special managed entity in the ONU. Then, after receiving the test message, the ONU may test the entity indicated by the test message. In addition, the ONU may send a response message of the test message to the OLT, to indicate that the ONU successfully starts the test. Then, after the test is completed, the ONU may actively send a test result (test result) message (namely, an OMCI message of a test result type) to the OLT to report a test result of the entity.

In an EPON, the OLT manages the ONU according to an OAM protocol, and the OLT may send an OAM message to the ONU to collect data of the ONU.

In a possible implementation, in the EPON, the OLT may obtain the data of the ONU by using a procedure shown in FIG. 6. The OLT may send an OAM packet data unit (OAM packet data unit, OAMPDU) to the ONU to request to obtain information about the ONU, and the ONU may return an OAMPDU to the OLT, to report the information about the ONU.

In all the foregoing manners in which the OLT collects the data of the ONU, the OLT actively delivers a message to the ONU to request to obtain the data, and the ONU then returns the requested data. In a scenario in which one OLT manages a large quantity of ONUs, if data of all ONUs needs to be obtained, the OLT needs to deliver an instruction to each ONU. In this manner, a large quantity of resources and a processing capability of the OLT are occupied, and other functions of the OLT are affected. Further, limited by the resources and the capability of the OLT, the OLT does not support frequent obtaining of the data of the ONU. In other words, a period of collecting the data of the ONU is long.

To resolve a problem that a large quantity of OLT resources are occupied and the OLT does not support short-period ONU data collection due to ONU data collection, this application provides an ONU data collection method. In the method, an OLT may configure subscription information to an ONU, so that the ONU can periodically report data to the OLT based on the subscription information. Therefore, the OLT does not need to actively send a message to collect the data of the ONU. In this method, the OLT needs to configure the subscription information only once, and does not need to send the additional message subsequently, so that resources of the OLT can be greatly saved. Further, in this method, the OLT does not need to actively send the message to collect the data of the ONU. Therefore, the collection period of the data of the ONU is not limited by a capability of the OLT, and short-period data collection can be implemented provided that the period for which the ONU reports the data is set to be short.

The following describes technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" refers to two or more than two unless otherwise specified. "At least one of the following items (pieces)" or a similar expression thereof indicates any combination of these items, including a single item (piece) or any combination of a plurality of items (pieces). For example, at least one (piece) of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference. In addition, in embodiments of this application, words such as "example" or "for example" are used to represent giving an example, an illustration, or a description. Any embodiment or design solution described as an "example" or "for example" in embodiments of this application should not be explained as being more preferred or having more advantages than another embodiment or design solution. Exactly, use of the words such as "example" or "for example" is intended to present a related concept in a specific manner for ease of understanding.

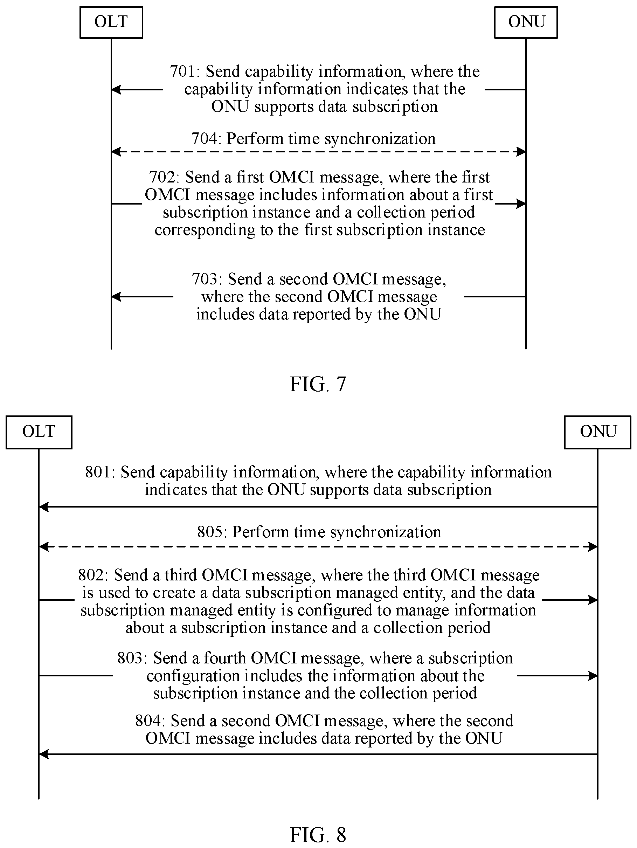

Optionally, an example in which a PON is a GPON and an OLT communicates with an ONU according to an OMCI protocol is used. FIG. 7 is a schematic flowchart of an ONU data collection method according to this application. As shown in FIG. 7, the method may include the following steps.

Step 701: The ONU sends capability information to the OLT, and correspondingly, the OLT receives the capability information from the ONU. The capability information indicates that the ONU supports data subscription.

Optionally, before step 701, the ONU may be configured in advance, so that the ONU supports the data subscription.

Optionally, the capability information indicating that the ONU supports the data subscription may be sent by the ONU to the OLT in a process of registration and onboarding.

Step 702: The OLT sends a first OMCI message to the ONU, and correspondingly, the ONU receives the first OMCI message. The first OMCI message includes information about a first subscription instance and a collection period corresponding to the first subscription instance.

It can be learned from the foregoing related descriptions of the OMCI protocol that the OLT may manage the ONU by accessing an instance of a managed entity in the ONU. Therefore, that the OLT intends to perform data subscription on the ONU may also be implemented based on the instance of the managed entity in the ONU.

In this embodiment of this application, the first subscription instance is an instance of a managed entity in the ONU, and the first subscription instance is an instance of the data subscription to be performed by the OLT. The first OMCI message includes the information about the first subscription instance, to indicate the first subscription instance to the ONU, so that the ONU reports related data of the first subscription instance.

Optionally, in the ONU, the instance of the managed entity needs to be determined by both an identifier of the managed entity and an instance identifier. Therefore, the information about the first subscription instance may include a first entity identifier and a first instance identifier. The first entity identifier is an identifier of the entity to which the first subscription instance belongs, and the first instance identifier is an identifier of the first subscription instance.

The collection period corresponding to the first subscription instance is a period in which the ONU collects the data of the first subscription instance. The first OMCI message includes the collection period corresponding to the first subscription instance, to indicate the ONU to periodically report the data of the first subscription instance to the OLT based on the collection. Optionally, in this embodiment of this application, the collection period may be at a millisecond (ms) level. In other words, data reporting in a short period is supported in this application.

Optionally, the first OMCI message may further indicate a data subscription behavior, and the data subscription behavior may include attribute subscription and test subscription. The attribute subscription indicates that the OLT needs to subscribe to attribute information of the first subscription instance, and the ONU may subsequently periodically report the attribute information of the first subscription instance based on the data subscription behavior. The test subscription indicates that the OLT subscribes to a test result of the first subscription instance, and the ONU subsequently needs to periodically test the first subscription instance based on the collection period, and actively report the test result.

Optionally, an attribute of the first subscription instance that the OLT subscribes to may be a common static attribute, a table attribute, or a PM attribute. When the first subscription instance is an instance in a PM managed entity, the subscribed attribute is the PM attribute.

Optionally, when the subscription behavior is the attribute subscription, the first OMCI message may further include an attribute mask, and the attribute mask is used to determine the subscribed attribute.

Optionally, when the subscription behavior is the test subscription, the first OMCI message may further include test code, and the test code is used to test the first subscription instance.

The ONU data collection method provided in this embodiment of this application is implemented based on the data subscription. There is no related solution in a conventional technology. Therefore, there is no OMCI message type indicating the data subscription in existing OMCI message types. Optionally, the first OMCI message may be an OMCI message of a message type newly defined in this application, and the message type of the first OMCI message may be referred to as a subscription type.

Optionally, the OMCI message of the subscription type newly defined in this application may be defined with reference to an OMCI message type in an existing protocol. A definition of the OMCI message of the subscription type newly defined in this application may be shown in Table 1. The message type (message type, MT) column is a number of an OMCI message type. According to the existing OMCI protocol, MT values 0 to 3 and 29 to 31 are reserved. An MT value of the OMCI message of the subscription type newly defined in this application may be set to 30, which complies with a specification of the OMCI protocol. The type (type) column is a type name of the OMCI message, and a value thereof is "Subscribe". The purpose (purpose) column is a purpose description of the OMCI message. The OMCI message of the subscription type is used to subscribe to the data from the ONU. The acknowledge (acknowledge, AK) column indicates whether a receiver needs to return an acknowledgement message to acknowledge that the OMCI message of the subscription type is received, and a value thereof is "Yes". The incremental management information base (MIB, management information base) data synchronization column indicates whether the receiver needs to perform incremental MIB data synchronization after the receiver receives the OMCI message of the subscription type, and a value thereof is "Yes".

**Table 1**

| MT | Type (type) | Purpose (purpose) | AK | Incremental MIB data synchronization |
|---|---|---|---|---|
| 30 | Subscribe (subscribe) | Subscribe to data from an ONU | Yes | Yes |

In a possible implementation, a format and related descriptions of the first OMCI message of the subscription type provided in this application may be shown in Table 2. Table 2 shows content of each field/domain (field) in the first OMCI message and an occupied byte (byte). In this embodiment of this application, the field and the domain express a same meaning, and are uniformly described herein.

As shown in Table 2, in the first OMCI message, 1^{st} and 2^{nd} bytes are a transaction correlation identifier (transaction correlation identifier) field, and may be used to carry a transaction correlation identifier. A 3^{rd} byte is a message type (message type) field, and may indicate a message type. For example, a value of the message type field may be 30, to indicate that the message type is the subscription type. A 4^{th} byte is a device identifier (device identifier) field, and may be used to carry a device identifier. The device identifier is defined in an existing standard, and a value of the device identifier field may be 0x0A or 0x0B. If the value of the field is 0x0A, it may indicate that the first OMCI message has a fixed length. If the value of the field is 0x0B, it may indicate that the first OMCI message has a variable length. The automatic value for the device identifier in the first OMCI message corresponding to Table 2 may be 0x0A or 0x0B. 5^{th} to 8^{th} bytes may be a managed entity identifier (managed entity identifier) field, and the managed entity identifier field may be used to carry the information about the first subscription instance. The managed entity identifier field may include two parts. The 5^{th} and 6^{th} bytes may be used to carry the first entity identifier, and the 7^{th} and 8^{th} bytes may be used to carry the first instance identifier. 9^{th} and 10^{th} bytes may be a message contents length (message contents length) field, and the field indicates a length of the message contents (message contents) field. For example, a value of the field is a quantity of bytes of the message contents field. The message contents field is followed by the message contents length field (from an 11^{th} byte). A length of the field is not fixed, and the length of the field may be indicated by the message contents length field. A message integrity check (message integrity check, MIC) field is followed by the message contents field. The field is used to carry check code for message integrity check, and a length of the field is 4 bytes. In Table 2, an example in which the length of the message contents field is 7 bytes is used for description. Therefore, 11^{th} to 17^{th} bytes may be the message contents field, and 17^{th} to 20^{th} bytes may be the message integrity check field. In addition, in the message contents field, the 11^{th} byte may indicate the data subscription behavior. For example, a value "0" may indicate to enable the attribute subscription, and a value "1" may indicate to enable the test subscription. The 12^{th} and 13^{th} bytes may be used to carry the attribute mask (attribute mask) or the test code (test code). If the 11^{th} byte indicates to enable the attribute subscription, the 12^{th} and 13^{th} bytes may carry the attribute mask; or if the 11^{th} byte indicates to enable the test subscription, the 12^{th} and 13^{th} bytes may carry the test code. The 14^{th} to 16^{th} bytes may be used to carry the collection period.

**Table 2**

| Field/Domain (field) | Byte (byte) | Content (content) |
|---|---|---|
| Transaction correlation identifier | 1 and 2 | Transaction correlation identifier |
| Message type | 3 | Subscription type |
| Device identifier | 4 | Device identifier |
| Managed entity identifier | 5 and 6 | First entity identifier |
| | 7 and 8 | First instance identifier |
| Message contents length | 9 and 10 | Length of a subsequent message contents field |
| Message contents | 11 | Subscription behavior (attribute subscription or test subscription) |
| | 12 and 13 | Attribute mask (attribute subscription) or test code (test subscription) |
| | 14 to 17 | Collection period |
| Message integrity check | 18 to 20 | Check code for the message integrity check |

Step 703: The ONU sends a second OMCI message to the OLT, and correspondingly, the OLT receives the second OMCI message. The second OMCI message includes data reported by the ONU.

Optionally, the second OMCI message may include the data reported by the ONU, and the data may be the attribute information or the test result.

In a possible implementation, if the subscription behavior corresponding to the first subscription instance that the OLT subscribes to is the attribute subscription, the second OMCI message reported by the ONU includes the attribute information of the first subscription instance. Optionally, if the first subscription instance is a common entity, the attribute information may be some static attribute information of the first subscription instance. If the first subscription instance is a PM instance, the attribute of the first subscription instance is a PM attribute, and the attribute information may be a current accumulated value of the attribute of the first subscription instance.

In a possible implementation, if the subscription behavior corresponding to the first subscription instance that the OLT subscribes to is the test subscription, the ONU may periodically test the first subscription instance, and report a test result. In this case, the second OMCI message may include the test result of the first subscription instance.

Optionally, the second OMCI message may include a reporting behavior, the reporting behavior may include attribute information reporting and test result reporting, and the reporting behavior may indicate a data type reported by the second OMCI message.

Optionally, the second OMCI message may be an OMCI message of an existing type. In a possible implementation, when the subscription behavior corresponding to the first subscription instance is the attribute subscription, the second OMCI message may be an OMCI message of an attribute value change (attribute value change, AVC) type. The second OMCI message of the AVC type may be used to report the common attribute or the PM attribute of the first subscription instance. In another possible implementation, when the subscription behavior corresponding to the first subscription instance is the test subscription, the second OMCI message may be an OMCI message of a test result type, and the second OMCI message of the test result type may be used to report the test result of the first subscription instance.

Optionally, the second OMCI message may alternatively be an OMCI message of a message type newly defined in this application, and is specially used by the ONU to periodically report data in a case of the data subscription. The newly defined message type of the second OMCI message may be referred to as a reporting type.

Optionally, the OMCI message of the reporting type newly defined in this application may alternatively be defined with reference to an OMCI message type in an existing protocol. A definition of the OMCI message of the reporting type may be shown in Table 3. The MT column indicates a number of the OMCI message of the type. A value of the MT may be set to 31, which complies with a specification of the OMCI protocol. The type column is a type name of the OMCI message, and a value thereof is "Report". The purpose column is a purpose description of the OMCI message. The OMCI message of the reporting type is used to report the subscribed data by the ONU. The AK column indicates whether a receiver needs to return an acknowledgement message to acknowledge that the OMCI message of the reporting type is received, and a value thereof is "No". The incremental MIB data synchronization column indicates whether the receiver needs to perform incremental MIB data synchronization after the receiver receives the OMCI message of the reporting type, and a value thereof is "No".

**Table 3**

| MT | Type (type) | Purpose (purpose) | AK | Incremental MIB data synchronization |
|---|---|---|---|---|
| 31 | Report (upload) | An ONU reports subscribed data | No | No |

In a possible implementation, a format of the second OMCI message may be the same as the format of the first OMCI message shown in Table 2, but content of the fields is different.

Related descriptions of fields in the second OMCI message may be shown in Table 4. Table 4 shows content of the fields in the second OMCI message and occupied bytes. As shown in Table 4, the second OMCI message may also include fields such as a transaction correlation identifier, a message type, a device identifier, a managed entity identifier, a message contents length, and message contents. For descriptions of these fields, refer to the foregoing descriptions of the fields of the first OMCI message corresponding to Table 2.

Optionally, a value of the message type field in the second OMCI message may be different from the value of the message type field in the first OMCI message, and the value of the message type field in the second OMCI message may indicate the reporting type. In addition, a value of the device identifier field in the second OMCI message may be different from that in the first OMCI message. A length of the second OMCI message exceeds a largest length of a fixed-length message that can be indicated by the device identifier field. Therefore, the value of the device identifier field in the second OMCI message is 0x0B. In addition, content included in a message contents field in the second OMCI message may be different from content included in the message contents field in the first OMCI message. Refer to Table 4. The message contents field in the second OMCI message may include: a reporting behavior, an attribute mask or test code, data collection start time, data collection end time, a current collection period, and reported data. The second OMCI message is a message contents field from an 11^{th} byte, and the 11^{th} byte may indicate the reporting behavior of the second OMCI message. For example, "0" indicates attribute information reporting, and "1" indicates test result reporting. 12^{th} and 13^{th} bytes may be used to carry the attribute mask or the test code. If the reporting behavior is the attribute information reporting, the attribute mask is carried; or if the reporting behavior is the test result reporting, the test code is carried. 14^{th} to 21^{st} bytes may be used to carry the data collection start time. 22^{nd} to 29^{th} bytes may be used to carry the data collection end time. 30^{th} to 33^{rd} bytes may be used to carry the current collection period. 34^{th} to n^{th} bytes may be used to carry the reported data, where n is a variable, and n>34. If an amount of the reported data is large, a field of the reported data carried in the n bytes is longer, and a value of n is larger; or if an amount of the reported data is small, a field of the reported data carried in the n bytes is shorter, and a value of n is smaller.

**Table 4**

| Field (field) | Byte (byte) | Content (content) |
|---|---|---|
| Transaction correlation identifier | 1 and 2 | Transaction correlation identifier |
| Message type | 3 | Reporting type |
| Device identifier | 4 | Device identifier |
| Managed entity identifier | 5 and 6 | First entity identifier |
| | 7 and 8 | First instance identifier |
| Message contents length | 9 and 10 | Length of a message contents field |
| Message contents | 11 | Reporting behavior |
| | 12 and 13 | Attribute mask (attribute subscription) or test code (test subscription) |
| | 14 to 21 | Data collection start time |
| | 22 to 29 | Data collection end time |
| | 30 to 33 | Current collection period |
| | 34 to n | Reported data |
| Message integrity check | n+1 to n+4 | Check code for the message integrity check |

Optionally, the second OMCI message of the reporting type may be used to report attribute information, and may also be used to report a test result.

Optionally, step 703 may be periodically performed, and the ONU may periodically report the data of the subscription instance based on the collection period indicated by the first OMCI message.

Based on the foregoing method, when the ONU supports the data subscription, the OLT may configure information about the data subscription to the ONU by using the first OMCI message, so that the ONU can periodically report, based on the collection period, the data that the OLT subscribes to. In the method, the OLT needs to perform configuration only once, so that the ONU can periodically report the data, and the OLT does not need to send a message each time to collect the data, thereby greatly saving OLT resources and improving system efficiency. Further, in the method, the ONU actively reports the data, and this is not limited by a processing capability of the OLT. Therefore, the method can support short-period data collection.

Optionally, between step 701 and step 702, the method may further include the following step: Step 704: Perform time synchronization between the OLT and the ONU. A purpose of performing time synchronization is to ensure that subsequent configuration and data reporting can be performed correctly to avoid errors.

Optionally, an example in which the PON is the GPON and the OLT communicates with the ONU according to the OMCI protocol is still used. FIG. 8 is a schematic flowchart of another ONU data collection method according to this application. As shown in FIG. 8, the method may include the following steps.

Step 801 is the same as step 701. Reference may be made to the descriptions of step 701. Details are not described herein again.

Step 802: The OLT sends a third OMCI message to the ONU, and correspondingly, the ONU receives the third OMCI message. The third OMCI message is used to create a data subscription managed entity, and the data subscription managed entity is configured to manage information about a subscription instance and a collection period.

The third OMCI message may be an OMCI message of a create (create) type, and the create type is an existing message type in a standard. Details are not described in this application.

The data subscription managed entity is an OMCI managed entity (managed entity) that is newly defined in this application and that is configured to manage data subscription. The data subscription managed entity may be configured to store the information about the subscription instance and the collection period corresponding to the subscription instance, and may perform operations such as addition, deletion, and modification on the information about the subscription instance and the collection period. The ONU may perform data subscription based on the information about the subscription instance and the collection period in the data subscription managed entity, and periodically report data of the corresponding subscription instance.

In this embodiment of this application, a data subscription behavior of the OLT for the ONU may include attribute subscription and test subscription. For related descriptions, refer to the descriptions of the attribute subscription and the test subscription in step 702. Details are not described herein again. Correspondingly, based on different subscription behaviors, the data subscription managed entity may include two types. The first type is an attribute reporting type, and corresponds to an attribute subscription behavior; and the second type is a test reporting type, and corresponds to a test subscription behavior. For the subscription instance stored in the data subscription managed entity of the attribute reporting type, the ONU may subsequently report an attribute value of the subscription instance. For the subscription instance stored in the data subscription managed entity of the test reporting type, the ONU may subsequently test the subscription instance, and report a test result of the subscription instance.

In a possible implementation, a definition of the data subscription managed entity provided in this application may be shown in the following Table 5. A managed entity name (managed entity name) of the data subscription managed entity may be attribute subscription (attribute subscription) or test subscription (test subscription), and the subscription behavior corresponding to the data subscription managed entity may be directly reflected by using the name. A managed entity identifier of the data subscription managed entity may include an entity identifier of the data subscription managed entity and an instance identifier of the data subscription managed entity. A subscription instance table (subscription instance table) of the data subscription managed entity is used to store a configuration of the subscription instance. A configuration of one subscription instance may include information such as an effective flag, an entity identifier, an instance identifier, an attribute mask or test code, and a collection period. The entity identifier is an entity identifier of an entity to which the subscription instance belongs, the instance identifier is an instance identifier of the subscription instance, and the entity identifier and the instance identifier may be considered as information about the subscription instance.

**Table 5**

| | |
|---|---|
| Managed entity name | Attribute subscription or test subscription |
| Managed entity identifier | Entity identifier of a data subscription managed entity |
| | Instance identifier of the data subscription managed entity |
| Subscription instance table | A configuration of one subscription instance is as follows: |
| | an effective flag; |
| | an entity identifier; |
| | an instance identifier; |
| | an attribute mask or test code; and |
| | a collection period. |

Optionally, when the OLT creates the data subscription managed entity in the ONU by using the third OMCI message, the subscription instance table of the data subscription managed entity is empty. The configuration of the subscription instance in the subscription instance table may be indicated by the OLT by using another subsequent OMCI message.

Step 803: The OLT sends a fourth OMCI message to the ONU, and correspondingly, the ONU receives the fourth OMCI message. The fourth OMCI message includes a configuration of a third subscription instance, and the configuration of the third subscription instance includes information about the third subscription instance and a collection period.

Optionally, the fourth OMCI message may be an OMCI message of a set (set) type, and the set type is an existing message type in the standard. Details are not described in this application.

Optionally, in this embodiment of this application, the OLT may indicate configurations of a plurality of subscription instances to the ONU, to subscribe to a plurality of groups of data of the ONU.

Optionally, in addition to the configuration of the third subscription instance, the fourth OMCI message sent by the OLT to the ONU may further include a configuration of another subscription instance. That is, the fourth OMCI message may indicate configurations of a plurality of subscription instances at a time.

Optionally, the OLT may alternatively send the fourth OMCI message for a plurality of times, to indicate configurations of a plurality of subscription instances.

Optionally, a size of the subscription instance table is variable. More configurations of the subscription instances indicate larger sizes of subscription instance tables. Fewer configurations of the subscription instances indicate smaller sizes of subscription instance tables.

Optionally, in the configuration of the one subscription instance, the effective flag may occupy 1 byte, the entity identifier may occupy 2 bytes, the instance identifier may occupy 2 bytes, the attribute mask or the test code may occupy 2 bytes, and the collection period may occupy 4 bytes. Therefore, the configuration of the one subscription instance occupies 11 bytes, and the subscription instance table may occupy 11×N bytes, where N is a quantity of configurations of the subscription instances.

Optionally, after the data subscription managed entity is created, the OLT may subsequently perform operations such as addition, deletion, and modification on the subscription instance in the data subscription managed entity, to update a subscription instance to be subscribed to.

Step 804 is the same as step 703, and details are not described herein again.

Based on the method in step 801 to step 804, data subscription of the ONU can also be implemented. For technical effects that can be achieved, refer to the descriptions of the technical effects achieved by the method in step 701 to step 703.

Optionally, the method may further include step 805. Step 805 is the same as step 704, and details are not described herein again.

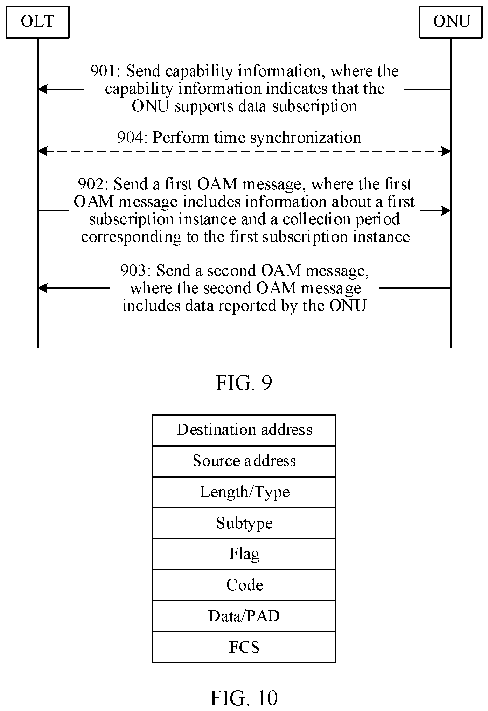

Optionally, an example in which a PON is an EPON and an OLT communicates with an ONU according to an OAM protocol is used. FIG. 9 is a schematic flowchart of an ONU data collection method according to this application. As shown in FIG. 9, the method may include the following steps.

Step 901: The ONU sends capability information to the OLT, and correspondingly, the OLT receives the capability information from the ONU. The capability information indicates that the ONU supports data subscription.

For step 901, refer to the descriptions of step 701. Details are not described herein again.

Step 902: The OLT sends a first OAM message to the ONU, and correspondingly, the ONU receives the first OAM message from the OLT. The first OAM message includes information about a third subscription instance and a collection period.

When the OLT manages the ONU according to an OAM protocol, the OLT may communicate with the ONU by using an OAMPDU. The OAMPDU supports extension. The first OAM message in this embodiment of this application may be an OAMPDU obtained through special extension.

FIG. 10 is a diagram of a format of a standard OAMPDU. As shown in FIG. 10, the OAMPDU may include the following fields.

Destination address (destination address, DA): A value thereof may be a slow_protocols_multicast (Slow_Protocols_Multicast) address.

Source address (source address, SA): The SA in the OAMPDU is an independent medium access control MAC (medium access control, MAC) address, and the address is associated with a port for sending the OAMPDU.

Length/Type (Length/Type): The OAMPDU uses type coding and includes a slow_protocols_type (Slow_Protocols_Type) domain value (0x8809).

Subtype (Subtype): A subtype domain identifies an encapsulated specific slow protocol (Slow Protocol). A value of the subtype domain in the OAMPDU is 0x03.

Flag (Flag): This field indicates a message event flag, including a status bit.

Code (Code): This field indicates different OAMPDU messages.

Data (Data/PAD) domain: This field is used for a valid payload of the OAMPDU. When these bytes are not used, the fields are filled with 0 during sending and are ignored during reception.

Frame check sequence (frame check sequence, FCS): This field is usually generated by lower-layer MAC.

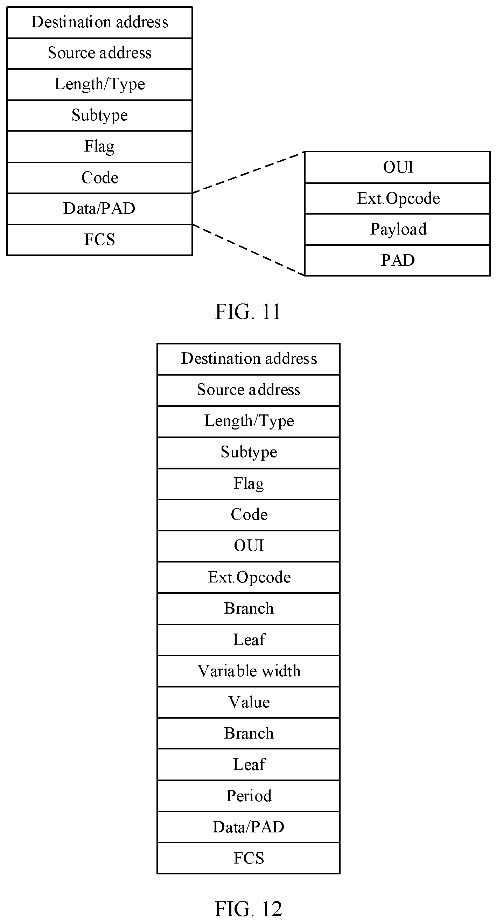

FIG. 11 is a diagram of a format of an existing extended OAMPDU. As shown in FIG. 11, the extended OAMPDU is an extension of a data part in a data/PAD domain in the standard OAMPDU format. Therefore, an extended data/PAD domain may include the following fields.

Organization unique identifier (organization unique identifier, OUI): A specific value of the OUI is configurable.

Extended operation code (Ext.Opcode): This field indicates an extended operation (Extended Operation) type.

Payload (Payload): This field carries data content.

Pad: This field is the same as a pad part in the original data/PAD domain.

In a conventional technology, some values of Ext.Opcode and extended operation types represented by Ext.Opcode are defined, as shown in Table 6.

**Table 6**

| Extended operation type corresponding to extended operation code | Value of the extended operation code (hexadecimal) | Description |
|---|---|---|
| Extended variable request | 0x01 | Used by an OLT to query an ONU for an extended attribute |
| Extended variable response | 0x02 | Used by the ONU to return an extended attribute to the OLT |
| Set request | 0x03 | Used by the OLT to configure an extended attribute/operation to the ONU |
| Set response | 0x04 | Used by the ONU to return a confirmation of a configuration of the extended attribute/operation to the OLT |
| ONU authentication | 0x05 | Used for the ONU authentication based on a logical identifier |
| ONU software download | 0x06 | Used for the ONU software download |
| Churning | 0x09 | Key exchange related to triple-churning |
| DBA | 0x0A | Configuration and query of a DBA parameter |
| Event notification | 0xFF | Configuration and query of an alarm status and a threshold |

The first OAM message in this application may be obtained by further extending an existing extended OAMPDU. In a possible implementation, the extended operation code of the first OAM message in this embodiment of this application be newly defined, and a value of the extended operation code may be different from that shown in Table 6, for example, 0x11 or 0x1F. All values of extended operation code that are not used currently may be used. This is not limited in this application. An extended operation type corresponding to the newly defined extended operation code may be data subscription, and is used to subscribe to an instance in the ONU.

According to an OAM protocol, the payload in the extended OAMPDU shown in FIG. 11 may indicate one or more managed objects, and some managed objects may have a plurality of instances.

An instance index of the managed object may identify an instance of the managed object to which a standard or extended attribute and operation following the Ext.Opcode are applied. The instance index of the managed object supports a TLV format, and the instance index TLV of the managed object may be shown in Table 7.

**Table 7**

| Quantity of bytes | Field | Description |
|---|---|---|
| 1 | Branch | Indicates that a TLV is an instance index of a managed object |
| 2 | Leaf | Indicates a type of the managed object |
| 1 | Variable width | Indicates a width of a subsequent value field |
| 4 | Value | Indicates a specific number of an instance of the managed object |

A managed object in an EPON system may be a port, an LLID, a PON interface, an ONU, or the like. The first OAM message in this embodiment of this application is used to manage the ONU, so that the managed object may be the ONU.

Optionally, the first OAM message may include an instance index TLV of the managed object, and the TLV may indicate a third subscription instance. A format of the instance index TLV of the managed object may be shown in Table 7. Information about the third subscription instance included in the first OAM message may include the TLV indicating the third subscription instance.

The managed object has a branch and a leaf. The branch may indicate an attribute or an operation type of the managed object, and the leaf indicates function information of the managed object. Currently, the branch and the leaf each have a plurality of values defined in a current standard. Different values indicate different meanings. Optionally, the information about the third subscription instance included in the first OAM message may further include the branch and/or the leaf of the managed object of the third subscription instance. In a possible implementation, a new field, domain, or TLV may be extended in the first OAM message to carry the branch and/or the leaf of the managed object of the third subscription instance.

Based on the foregoing descriptions of the OAMPDU, in a possible implementation, a format of a first OAM message defined in this application may be shown in FIG. 12. Related descriptions of fields in the first OAM message may be shown in Table 8. Table 8 shows content of the fields in the first OAM message and occupied bytes. Destination address, source address, length/type, subtype, flag, code, and OUI fields in the first OAM message may be the same as those specified in an existing OAM protocol. Reference may be made to the descriptions of the fields in the OAMPDU shown in FIG. 9. Details are not described herein again. A value of an Ext.Opcode field in the first OAM message may be a value newly defined in this application, and may indicate data subscription. Branch, leaf, variable width, and value fields following the Ext.Opcode field are jointly used as a TLV indicating subscription instance. For field descriptions of the TLV, refer to the descriptions in Table 7. A period field following the TLV may carry a collection period. The period field is followed by a reserved data/PAD field and an FCS field. A quantity of bytes occupied by each field may be shown in Table 8. Details are not described again.

**Table 8**

| Quantity of bytes | Byte | Content | |
|---|---|---|---|
| 6 | Destination address | Destination MAC address | |
| 6 | Source address | Source MAC address | |
| 2 | Length/Type | OAM message type domain, where a value may be 0x8809 | |
| 1 | Subtype | A value may be 0x03 | |
| 2 | Flag | Message event identifier | |
| 1 | Code | A value may be 0xFE | |
| 3 | OUI | Organization unique identifier | |
| 1 | Ext.Opcode | Extended operation type, indicating data subscription | |
| 1 | Branch | Indicates that a TLV is an instance index of a managed object, where a value may be 0x36 | The four fields take effect together to form an instance index TLV of an operation object, which indicates the instance (for example, the third subscription instance) of the managed object |
| 2 | Leaf | Type of the managed object | |
| 1 | Variable width | Indicates a width of a following value field, where a value may be 0x01 | |
| 1 | Value | Indicates a number of an instance of the managed object (for example, a number of a third subscription instance) | |
| 4 | Period | Collection period | |
| 28 | Data/PAD | This field is not used and is in a reserved state | |
| 4 | FCS | Frame check sequence | |

Step 903: The ONU periodically sends a second OAM message to the OLT, and correspondingly, the OLT periodically receives the second OAM message. The second OAM message includes the data reported by the ONU.

The data reported by the ONU may be determined by the ONU based on the subscription instance indicated by the first OAM message, and the branch and the leaf that need to be collected. In a possible case, the data reported by the ONU is a basic information parameter of the managed object of the ONU.

Optionally, the second OAM message may alternatively be obtained through further extension based on the extended OAMPDU. In a possible implementation, a format of the first OAM message may be the same as the format of the first OAM message shown in FIG. 12, and a difference lies only in that content of some fields may be different.

Meanings descriptions of fields in the second OAM message may be shown in Table 9. Table 9 shows content of the fields in the second OAM message and occupied bytes. A value of an Ext.Opcode field in the second OAM message may be different from the value of the Ext.Opcode field in the first OAM message, and the Ext.Opcode field in the second OAM message may indicate data reporting. Content included in a data/PAD field in the second OAM message may be different from the content included in the data/PAD field in the first OAM message, and the data/PAD field in the second OAM message may be used to carry data content reported by the ONU.

**Table 9**

| Quantity of bytes | Byte | Description | |
|---|---|---|---|
| 6 | Destination address | Destination MAC address | |
| 6 | Source address | Source MAC address | |
| 2 | Length/Type | OAM message type domain, where a value may be 0x8809 | |
| 1 | Subtype | A value may be 0x03 | |
| 2 | Flag | Message event identifier | |
| 1 | Code | A value may be 0xFE | |
| 3 | OUI | Organization unique identifier | |
| 1 | Ext.Opcode | Extended operation type, indicating data reporting | |
| 1 | Branch | Indicates that a TLV is an instance index of a managed object, where a value may be 0x36 | The four fields take effect together to form an instance index TLV of an operation object, which indicates the instance (for example, the third subscription instance) of the managed object |
| 2 | Leaf | Type of the managed object | |
| 1 | Variable width | Indicates a width of a following value field, where a value may be 0x01 | |
| 1 | Value | Indicates a number of an instance of the managed object (for example, a number of a third subscription instance) | |
| 4 | Period | Collection period | |
| 28 | Data/PAD | Carries reported data content | |
| 4 | FCS | Frame check sequence | |

Optionally, between step 901 and step 902, the method may further include the following step: Step 904: Perform time synchronization between the OLT and the ONU. A purpose of performing time synchronization is to ensure that subsequent configuration and data reporting can be performed correctly to avoid errors.

The method in step 901 to step 904 may also achieve technical effects that can be achieved by the method in step 701 to step 704. A difference lies in that the method in step 901 to step 904 is implemented according to the OAM protocol.

Therefore, in the two protocol scenarios provided in this application, data subscription and reporting are implemented, OLT resources are saved, and system efficiency is improved in the ONU data collection method.

The foregoing ONU data collection method is described by using a scenario in which the OLT manages the ONU. Optionally, in an FTTR networking scenario in which an OLT is connected to a plurality of levels of ONUs, a primary ONU may manage a secondary ONU. In this case, for a method for collecting data by the primary ONU from the secondary ONU, refer to the foregoing method for collecting the data by the OLT from the ONU.

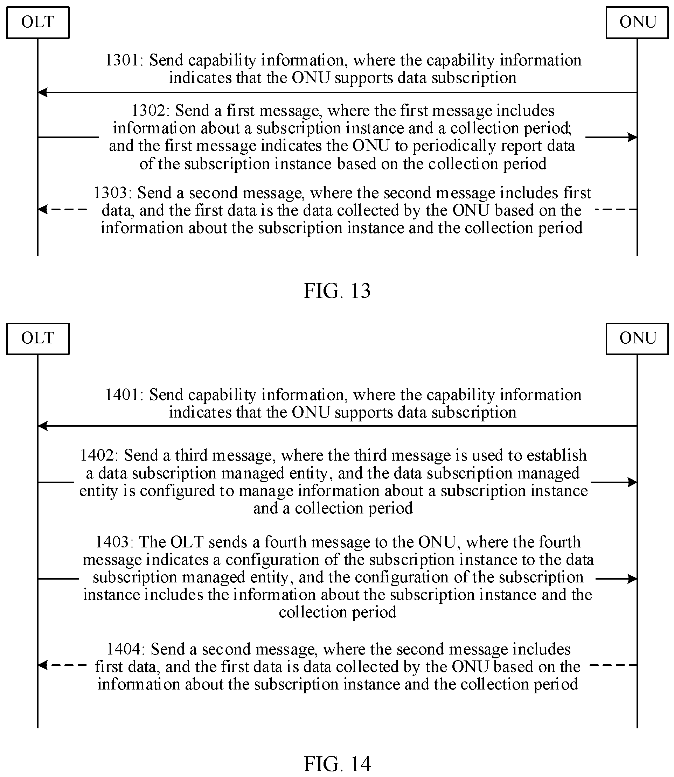

In conclusion, an embodiment of this application further provides an ONU data collection method. As shown in FIG. 13, the method may include the following steps.

Step 1301: An ONU sends capability information to an OLT, and correspondingly, the OLT receives the capability information from the ONU. The capability information indicates that the ONU supports data subscription.

For step 1301, refer to the descriptions of step 701. Details are not described herein again.

Step 1302: The OLT sends a first message to the ONU, and correspondingly, the ONU receives the first message from the OLT. The first message includes information about a subscription instance and a collection period. The first message indicates the ONU to periodically report data of the subscription instance based on the collection period.

Optionally, in a scenario in which the OLT communicates with the ONU according to an OMCI protocol, the first message may be an OMCI message of a subscription type. For the OMCI message of the subscription type, refer to the foregoing descriptions. Details are not described herein again.

Optionally, when the first message is the OMCI message of the subscription type, the first message may include a first field and a second field, the first field includes the information about the subscription instance, and the second field includes the collection period.

Optionally, when the first message is the OMCI message of the subscription type, the subscription instance may be an instance of an OMCI managed entity in the ONU, and the information about the subscription instance includes an identifier of the OMCI managed entity to which the subscription instance belongs and an identifier of the subscription instance.

Optionally, when the first message is the OMCI message of the subscription type, the second field may further include an attribute mask and an attribute subscription behavior. The attribute mask indicates an attribute of the subscription instance, and the attribute subscription behavior indicates that the data of the subscription instance that is reported by the ONU is an attribute value obtained by collecting the attribute of the subscription instance.

Optionally, when the first message is the OMCI message of the subscription type, the second field may further include test code and a test subscription behavior. The test code is used to test the subscription instance, and the test subscription behavior indicates that the data of the subscription instance that is reported by the ONU is a test result obtained by testing the subscription instance.

For example, the first message may be the first OMCI message in step 702, the subscription instance may be the first subscription instance, the first field may be the entity identifier field in the first OMCI message shown in Table 2, and the second field may be the message contents field in the first OMCI message shown in Table 2. For related descriptions, refer to the descriptions of the first OMCI message and the first subscription instance. Details are not described herein again.

Optionally, the first message may be an OAMPDU.

Optionally, when the first message is the OAMPDU, the first message may include a third field and a fourth field, the third field includes the information about the subscription instance, and the fourth field includes the collection period.

Optionally, when the first message is the OAMPDU, the subscription instance is an instance of an OAM managed object, and the information about the subscription instance includes a branch and a leaf of the OAM managed object.

Optionally, when the first message is the OAMPDU, the first message may further include first extended operation code, and the first extended operation code indicates a data subscription operation.

For example, the first message may be the foregoing first OAM message, and the subscription instance may be the foregoing third subscription instance. For related descriptions, refer to the foregoing descriptions of the first OAM message and the third subscription instance. Details are not described herein again.

Optionally, the method may further include the following step: Step 1303: The ONU sends a second message to the OLT, and correspondingly, the OLT receives the second message from the ONU. The second message includes first data, and the first data is data collected by the ONU based on the information about the subscription instance and the collection period.

Optionally, when the first message is the OMCI message, the second message is also an OMCI message. Optionally, the second message is an OMCI message of a reporting type.

Optionally, the first data is the attribute value of the subscription instance, or the first data is the test result obtained by testing the subscription instance.

For example, the second message may be the foregoing second OMCI message. For content of the second message, refer to the related descriptions of the second OMCI message. Details are not described herein again.

Optionally, when the first message is the OAMPDU, the second message is also an OAMPDU. The first data is basic information (base information) of the subscription instance.

Optionally, when the second message is the OAMPDU, the second message may further include second extended operation code, and the second extended operation code indicates a data reporting operation.

For example, the second message may be the foregoing second OAM message. For content of the second message, refer to the related descriptions of the second OAM message. Details are not described herein again.

An embodiment of this application further provides an ONU data collection method. As shown in FIG. 14, the method may include the following steps:
Step 1401: An OLT receives capability information from an ONU, where the capability information indicates that the ONU supports data subscription.
Step 1402: The OLT sends a third message to the ONU, and correspondingly, the ONU receives the third message from the OLT. The third message is used to establish a data subscription managed entity, the data subscription managed entity is configured to manage information about a subscription instance and a collection period, and the information about the subscription instance and the collection period are used by the ONU to periodically report data of the subscription instance.

Optionally, the third message is an OMCI message of a create type, and the data subscription managed entity belongs to an OMCI managed entity.

Optionally, the data subscription managed entity is a managed entity of an attribute subscription type or a managed entity of a test subscription type.

Optionally, when the data subscription managed entity is the managed entity of the attribute subscription type, the data of the subscription instance that is reported by the ONU is an attribute value of the subscription instance.

Optionally, when the data subscription managed entity is the managed entity of the test subscription type, the data of the subscription instance that is reported by the ONU is a test result of the subscription instance.

For example, the third message may be the foregoing third OMCI message. Reference may be made to the foregoing related descriptions of the third OMCI message. Details are not described herein again.

Optionally, the method may further include the following step: Step 1403: The OLT sends a fourth message to the ONU, and correspondingly, the ONU receives the fourth message. The fourth message indicates a configuration of the subscription instance to the data subscription managed entity, and the configuration of the subscription instance includes the information about the subscription instance and the collection period.

Optionally, the fourth message is an OMCI message of a set type.

Optionally, the information about the subscription instance includes an entity identifier of an entity to which the subscription instance belongs and an instance identifier of the subscription instance.

Optionally, when the data subscription managed entity is the managed entity of the attribute subscription type, the configuration of the subscription instance further includes an attribute mask corresponding to the subscription instance, and the attribute mask indicates an attribute of the subscription instance.

Optionally, when the data subscription managed entity is the managed entity of the test subscription type, the configuration of the subscription instance further includes test code corresponding to the subscription instance, and the test code is used to test the subscription instance.

For example, the fourth message may be the fourth OMCI message. Reference may be made to the foregoing related descriptions of the fourth OMCI message. Details are not described herein again.

Optionally, the method may further include step 1404. Step 1404 is the same as step 1303. Reference may be made to the descriptions of step 1303. Details are not described herein again.

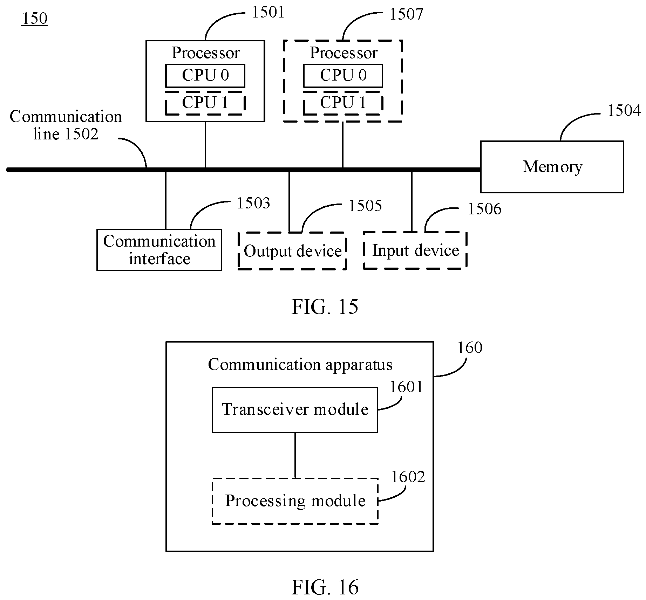

Optionally, the ONU and the OLT in this embodiment of this application may use a composition structure shown in FIG. 15 or include components shown in FIG. 15. FIG. 15 is a diagram of a structure of a communication apparatus 150 according to an embodiment of this application. As shown in FIG. 15, the communication apparatus 150 includes one or more processors 1501, a communication line 1502, and at least one communication interface (in FIG. 15, only an example in which one communication interface 1503 and one processor 1501 are included is used for description). Optionally, a memory 1504 may be further included.

The processor 1501 may be a general-purpose central processing unit (central processing unit, CPU), a microprocessor, an application-specific integrated circuit (application-specific integrated circuit, ASIC), or one or more integrated circuits that are configured to control program execution in the solutions of this application.

The communication line 1502 may include a path used for communication between different components.

The communication interface 1503 may be a transceiver module, configured to communicate with another device or a communication network, such as an Ethernet, a RAN, or a wireless local area network (wireless local area network, WLAN). For example, the transceiver module may be an apparatus such as a transceiver or a transceiver device. Optionally, the communication interface 1503 may alternatively be a transceiver circuit located in the processor 1501, and is configured to implement signal input and signal output of the processor.

The memory 1504 may be an apparatus with a storage function. For example, the memory may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, this is not limited thereto. The memory may exist independently, and is connected to the processor through the communication line 1502. The memory may alternatively be integrated with the processor.

The memory 1504 is configured to store computer-executable instructions for executing the solutions of this application, and the processor 1501 controls the execution. The processor 1501 is configured to execute the computer-executable instructions stored in the memory 1504, to implement the ONU data collection method provided in embodiments of this application.

Alternatively, optionally, in this embodiment of this application, the processor 1501 may perform a processing-related function in the ONU data collection method provided in the following embodiments of this application, and the communication interface 1503 is responsible for communicating with another device or a communication network. This is not specifically limited in this embodiment of this application.

Optionally, the computer-executable instructions in this embodiment of this application may also be referred to as application program code. This is not specifically limited in this embodiment of this application.

During specific implementation, in an embodiment, the processor 1501 may include one or more CPUs, for example, a CPU 0 and a CPU 1 in FIG. 15.

During specific implementation, in an embodiment, the communication apparatus 150 may include a plurality of processors, for example, the processor 1501 and a processor 1507 in FIG. 15. Each of these processors may be a single-core (single-core) processor or may be a multi-core (multi-core) processor. The processor herein may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each computing device may include one or more cores for executing software instructions to perform operation or processing.

During specific implementation, in an embodiment, the communication apparatus 150 may further include an output device 1505 and an input device 1506. The output device 1505 communicates with the processor 1501, and may display information in a plurality of manners. For example, the output device 1505 may be a liquid crystal display (liquid crystal display, LCD), a light emitting diode (light emitting diode, LED) display device, a cathode ray tube (cathode ray tube, CRT) display device, or a projector (projector). The input device 1506 communicates with the processor 1501, and may receive an input of a user in a plurality of manners. The communication apparatus 150 may also be referred to as a communication apparatus sometimes, and may be a general-purpose device or a dedicated device. For example, the communication apparatus 150 may be a desktop computer, a portable computer, a network server, a palmtop computer (personal digital assistant, PDA), a mobile phone, a tablet computer, a wireless terminal device, an embedded device, the foregoing terminal device, the foregoing network device, or a device having a structure similar to that in FIG. 15. A type of the communication apparatus 150 is not limited in this embodiment of this application.

Optionally, an action of the OLT in the foregoing method embodiments may be performed by the processor 1501 in the communication apparatus 150 shown in FIG. 15 by invoking the application program code stored in the memory 1504, to indicate the OLT to perform the action, and an action of the ONU may be performed by the processor 1501 in the communication apparatus 150 shown in FIG. 15 by invoking the application program code stored in the memory 1504, to indicate the ONU to perform the action.

Optionally, an embodiment of this application further provides another communication apparatus. The communication apparatus is configured to implement the foregoing methods. The communication apparatus may be a target node in the foregoing method embodiments, or an apparatus including the target node, or a component that can be used in the target node. It may be understood that, to implement the foregoing functions, the communication apparatus includes a hardware structure and/or a software module for performing a corresponding function. A person skilled in the art should be easily aware that with reference to units and algorithm steps in the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, the division into the modules is an example, and is merely logical function division. During actual implementation, another division manner may be used.

FIG. 16 is a diagram of a structure of a communication apparatus 160. The communication apparatus 160 may include a transceiver module 1601. The transceiver module 1601 may also be referred to as a transceiver unit, and is configured to implement a transceiver function. For example, the transceiver module may be a transceiver circuit, a transceiver device, a transceiver, or a communication interface. Optionally, the communication apparatus 160 may further include a processing module 1602.

An example in which the communication apparatus 160 is the OLT in the method embodiment corresponding to FIG. 13 is used.

The transceiver module 1601 may be configured to receive capability information from an ONU, where the capability information indicates that the ONU supports data subscription. The transceiver module 1601 may be further configured to send a first message to the ONU, where the first message includes information about a subscription instance and a collection period. The first message indicates the ONU to periodically report data of the subscription instance based on the collection period.

Optionally, the transceiver module 1601 may be further configured to receive a second message from the ONU, where the second message includes first data, and the first data is the data collected by the ONU based on the information about the subscription instance and the collection period.

An example in which the communication apparatus 160 is the ONU in the method embodiment corresponding to FIG. 13 is used.

The transceiver module 1601 may be configured to send capability information to an OLT, where the capability information indicates that the ONU supports data subscription. The transceiver module 1601 may be further configured to receive a first message from the OLT, where the first message includes information about a subscription instance and a collection period. The first message indicates the ONU to periodically report data of the subscription instance based on the collection period.

Optionally, the transceiver module 1601 may be further configured to send a second message to the OLT, where the second message includes first data, and the first data is the data collected by the ONU based on the information about the subscription instance and the collection period.

An example in which the communication apparatus 160 is the OLT in the method embodiment corresponding to FIG. 14 is used.

The transceiver module 1601 is configured to receive capability information from an ONU, where the capability information indicates that the ONU supports data subscription. The transceiver module 1601 is further configured to send a third message to the ONU, where the third message is used to establish a data subscription managed entity, the data subscription managed entity is configured to manage information about a subscription instance and a collection period, and the information about the subscription instance and the collection period are used by the ONU to periodically report data of the subscription instance.

Optionally, the transceiver module 1601 is further configured to send a fourth message to the ONU, where the fourth message indicates a configuration of the subscription instance to the data subscription managed entity, and the configuration of the subscription instance includes the information about the subscription instance and the collection period.

Optionally, the transceiver module 1601 is further configured to receive a second message from the ONU, where the second message includes first data, and the first data is the data collected by the ONU based on the information about the subscription instance and the collection period.

An example in which the communication apparatus 160 is the ONU in the method embodiment corresponding to FIG. 14 is used.

The transceiver module 1601 is configured to send capability information to an OLT, where the capability information indicates that the ONU supports data subscription. The transceiver module 1601 is further configured to receive a third message from the OLT, where the third message is used to establish a data subscription managed entity, the data subscription managed entity is configured to manage information about a subscription instance and a collection period, and the information about the subscription instance and the collection period are used by the ONU to periodically report data of the subscription instance.

Optionally, the transceiver module 1601 is further configured to receive a fourth message from the OLT, where the fourth message indicates a configuration of the subscription instance to the data subscription managed entity, and the configuration of the subscription instance includes the information about the subscription instance and the collection period.

Optionally, the transceiver module 1601 is further configured to send a second message to the OLT, where the second message includes first data, and the first data is the data collected by the ONU based on the information about the subscription instance and the collection period.

It needs to be noted that all related content of the steps in the foregoing method embodiments may be cited in function descriptions of corresponding functional modules. Details are not described herein again. The communication apparatus 160 provided in this embodiment may perform the foregoing ONU data collection method. Therefore, for technical effects that can be achieved by the communication apparatus, refer to the foregoing method embodiments. Details are not described herein again.

Optionally, the network device or the control device in embodiments of this application may also be referred to as a communication apparatus, and may be a general-purpose device or a dedicated device. This is not specifically limited in this embodiment of this application.

In this embodiment, the communication apparatus 160 is presented in a form of functional modules obtained through division in an integrated manner. The "module" herein may be an ASIC, a circuit, a processor that executes one or more software or firmware programs, a memory, an integrated logic circuit, and/or another device capable of providing the foregoing functions. In a simple embodiment, a person skilled in the art may figure out that the communication apparatus 160 may be in a form of the communication apparatus 150 shown in FIG. 15.

For example, the processor 1501 in the communication apparatus 150 shown in FIG. 15 may invoke the computer-executable instructions stored in the memory 1504, to enable the communication apparatus 150 to perform the ONU data collection method in the foregoing method embodiments.

Specifically, functions/implementation processes of the transceiver module 1601 and the processing module 1602 in FIG. 16 may be implemented by the processor 1501 in the communication apparatus 150 shown in FIG. 15 by invoking the computer-executable instructions stored in the memory 1504. Alternatively, functions/implementation processes of the transceiver module 1601 in FIG. 16 may be implemented by using the communication interface 1503 in the communication apparatus 150 shown in FIG. 15, and functions/implementation processes of the processing module 1602 in FIG. 16 may be implemented by the processor 1501 in the communication apparatus 150 shown in FIG. 15 by invoking the computer-executable instructions stored in the memory 1504.

It should be understood that sequence numbers of the foregoing processes do not mean execution sequences in various embodiments of this application. The execution sequences of the processes should be determined based on functions and internal logic of the processes, and should not constitute any limitation on the implementation processes in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, refer to corresponding processes in the foregoing method embodiments. Details are not described herein again.

In several embodiments provided in this application, it should be understood that the disclosed system, device, and method may be implemented in other manners. For example, the described device embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on an actual requirement to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by software, hardware, firmware, or any combination thereof. When a software program is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium that can be accessed by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

Terms such as "component", "module", and "system" used in this application are used to indicate computer-related entities. The computer-related entities may be hardware, firmware, combinations of hardware and software, software, or software in running. For example, a component may be, but is not limited to, a process that runs on a processor, a processor, an object, an executable file, a thread of execution, a program, and/or a computer. As an example, both a computing device and an application that runs on the computing device may be components. One or more components may reside within a process and/or a thread of execution, and a component may be located on one computer and/or distributed between two or more computers. In addition, these components may be executed from various computer-readable media that have various data structures. These components may perform communication by using a local and/or remote process and based on, for example, a signal having one or more data packets (for example, data from one component, where the component interacts with another component in a local system or a distributed system, and/or interacts with another system via a network such as the Internet by using a signal).

This application presents aspects, embodiments, or features around a system that may include a plurality of devices, components, modules, or the like. It should be appreciated and understood that, each system may include another device, component, module, and the like, and/or may not include all devices, components, modules, and the like discussed with reference to the accompanying drawings. In addition, a combination of these solutions may be used.

In addition, the word "example" in embodiments of this application is used to represent giving an example, an illustration, or a description. Any embodiment or design solution described as an "example" in this application should not be explained as being more preferred or having more advantages than another embodiment or design solution. Exactly, the word "example" is to present a concept in a specific manner.

In embodiments of this application, one of information (information), signal (signal), message (message), or channel (channel) may be used sometimes. It should be noted that expressed meanings are consistent when differences of the terms are not emphasized. "Of (of)", "corresponding (corresponding, relevant)", and "corresponding (corresponding)" may sometimes be interchangeably used. It should be noted that meanings expressed by the terms are consistent when differences of the terms are not emphasized. Sometimes, "system" and "network" may be mixed sometimes. Meanings expressed by the terms are consistent when differences of the terms are not emphasized. For example, "communication network" also refers to "communication system".

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical network unit ONU data collection method, wherein the method comprises:
receiving, by an optical line terminal OLT, capability information from an ONU, wherein the capability information indicates that the ONU supports data subscription; and
sending, by the OLT, a first message to the ONU, wherein the first message comprises information about a subscription instance and a collection period, and the first message indicates the ONU to periodically report data of the subscription instance based on the collection period.

2. The method according to claim 1, wherein the first message is an ONU management and control interface OMCI message of a subscription type, and the first message comprises a first field and a second field, wherein the first field comprises the information about the subscription instance, and the second field comprises the collection period.

3. The method according to claim 2, wherein the second field further comprises an attribute mask and an attribute subscription behavior, wherein the attribute mask indicates an attribute of the subscription instance, and the attribute subscription behavior indicates that the data of the subscription instance that is reported by the ONU is an attribute value obtained by collecting the attribute of the subscription instance.

4. The method according to claim 2, wherein the second field further comprises test code and a test subscription behavior, wherein the test code is used to test the subscription instance, and the test subscription behavior indicates that the data of the subscription instance that is reported by the ONU is a test result obtained by testing the subscription instance.

5. The method according to any one of claims 2 to 4, wherein the subscription instance is an instance of an OMCI managed entity in the ONU, and the information about the subscription instance comprises an identifier of the OMCI managed entity to which the subscription instance belongs and an identifier of the subscription instance.

6. The method according to claim 1, wherein the first message is an operations, administration, and maintenance packet data unit OAMPDU; and
the first message comprises a third field and a fourth field, the third field comprises the information about the subscription instance, and the fourth field comprises the collection period.

7. The method according to claim 6, wherein the subscription instance is an instance of a first OAM managed object, and the information about the subscription instance comprises a branch and a leaf of the first OAM managed object.

8. The method according to claim 6 or 7, wherein the first message further comprises first extended operation code, and the first extended operation code indicates a data subscription operation.

9. The method according to any one of claims 1 to 8, wherein the method further comprises:
receiving, by the OLT, a second message from the ONU, wherein the second message comprises first data, and the first data is the data collected by the ONU based on the information about the subscription instance and the collection period.

10. The method according to claim 9, wherein when the first message is the OMCI message, the second message is also an OMCI message; and
the first data is the attribute value of the subscription instance, or the first data is the test result obtained by testing the subscription instance.

11. The method according to claim 10, wherein the second message is an OMCI message of a reporting type.

12. The method according to claim 9, wherein when the first message is the OAMPDU, the second message is also an OAMPDU, and the first data is basic information of the subscription instance.

13. The method according to claim 12, wherein the second message further comprises second extended operation code, and the second extended operation code indicates a data reporting operation.

14. An optical network unit ONU data collection method, wherein the method comprises:
sending, by an ONU, capability information to an optical line terminal OLT, wherein the capability information indicates that the ONU supports data subscription; and
receiving, by the ONU, a first message from the OLT, wherein the first message comprises information about a subscription instance and a collection period, and the first message indicates the ONU to periodically report data of the subscription instance based on the collection period.

15. The method according to claim 14, wherein the first message is an ONU management and control interface OMCI message of a subscription type, and the first message comprises a first field and a second field, wherein the first field comprises the information about the subscription instance, and the second field comprises the collection period.

16. The method according to claim 15, wherein the second field further comprises an attribute mask and an attribute subscription behavior, wherein the attribute mask indicates an attribute of the subscription instance, and the attribute subscription behavior indicates that the data of the subscription instance that is reported by the ONU is an attribute value obtained by collecting the attribute of the subscription instance.

17. The method according to claim 15, wherein the second field further comprises test code and a test subscription behavior, wherein the test code is used to test the subscription instance, and the test subscription behavior indicates that the data of the subscription instance that is reported by the ONU is a test result obtained by testing the subscription instance.

18. The method according to any one of claims 15 to 17, wherein the subscription instance is an instance of an OMCI managed entity in the ONU, and the information about the subscription instance comprises an identifier of the OMCI managed entity to which the subscription instance belongs and an identifier of the subscription instance.

19. The method according to claim 14, wherein the first message is an operations, administration, and maintenance packet data unit OAMPDU; and
the first message comprises a third field and a fourth field, the third field comprises the information about the subscription instance, and the fourth field comprises the collection period.

20. The method according to claim 19, wherein the subscription instance is an instance of a first OAM managed object, and the information about the subscription instance comprises a branch branch and a leaf leaf of the first OAM managed object.

21. The method according to claim 19 or 20, wherein the first message further comprises first extended operation code, and the first extended operation code indicates a data subscription operation.

22. The method according to any one of claims 14 to 21, wherein the method further comprises:
sending, by the ONU, a second message to the OLT, wherein the second message comprises first data, and the first data is the data collected by the ONU based on the information about the subscription instance and the collection period.

23. The method according to claim 22, wherein when the first message is the OMCI message, the second message is also an OMCI message; and
the first data is the attribute value of the subscription instance, or the first data is the test result obtained by testing the subscription instance.

24. The method according to claim 22 or 23, wherein the second message is an OMCI message of a reporting type.

25. The method according to claim 22, wherein when the first message is the OAMPDU, the second message is also an OAMPDU, and the first data is basic information of the subscription instance.

26. The method according to claim 25, wherein the second message further comprises second extended operation code, and the second extended operation code indicates a data reporting operation.

27. A communication apparatus, wherein the communication apparatus comprises a processor and a memory, wherein
the memory is configured to store computer-executable instructions, and when the processor executes the computer-executable instructions, the communication apparatus is enabled to perform the method according to any one of claims 1 to 13 or the method according to any one of claims 14 to 26.

28. A computer-readable storage medium, wherein the computer-readable storage medium stores a computer program, and when the computer program is executed by a computer, the computer is enabled to perform the method according to any one of claims 1 to 13 or the method according to any one of claims 14 to 26.
